# EUROPEAN PATENT SPECIFICATION

(11) **EP 3 655 223 B1**
(45) Date of publication and mention of the grant of the patent: **15.09.2021**
(21) Application number: 18762936.5
(22) Date of filing: 17.07.2018
(51) Int. Cl.: B29C 45/00, B29C 45/78, B29D 99/00, A47G 21/06

(54) **MOLDING PROCESS OF A DISPOSABLE PRODUCT**
VERFAHREN ZUM FORMEN EINES EINWEGPRODUKTES
PROCÉDÉ DE MOULAGE POUR UN PRODUIT JETABLE

(30) Priority: 19.07.2017 IT 201700081834
(43) Date of publication of application: 27.05.2020
(73) Proprietor: Marchi e Brevetti Holding S.r.l., 80129 Napoli (IT)
(72) Inventor: RICCIOLIO, Massimo, 80127 Napoli (IT)
(74) Representative: Garavelli, Paolo
(86) International application number: PCT/IT2018/000100
(87) International publication number: WO 2019/016839

(56) References cited:
- WO-A1-02/070224
- WO-A1-2015/012713
- US-A1- 2007 101 578
- US-A1- 2009 179 442
- US-A1- 2013 140 746
- US-A1- 2014 106 145
- "Plastic Tasting Spoons", INTERNET CITATION, 31 May 2017 (2017-05-31), XP002778239, Retrieved from the Internet: URL:https://www.regalzone.com/_img/pdf/86. pdf [retrieved on 2018-02-12]
- "Prairieware Disposable Heavy Duty Desert Spoons X100", INTERNET CITATION, 2 January 2016 (2016-01-02), XP002778240, Retrieved from the Internet: URL:https://www.obtainwise.com/prairieware -disposable-heavy-duty-dessert-spoons-x100 .html [retrieved on 2018-02-12]
- "Spiccio il cilindro a tovola", INTERNET CITATION, 29 August 2017 (2017-08-29), XP002778241, Retrieved from the Internet: URL:https://issuu.com/salviocapasso/docs/s piccio-ita_temp [retrieved on 2018-02-09]

## Description

The present invention refers to a molding process of a disposable element, in particular a disposable element to be used when eating meals, composed of high-impact polystyrene and coated with stainless steel.

As known, all materials and objects aimed to get in contact with foods, the so-called MOCA (plates, glasses, cutlery, bottles, work knives, packaging paper, plastic films, tags in contact with foods, pizza boxes, packages, etc.) must comply with EU Manufacturing Standards and, in particular EU Regulation 1935/2004 and EU Regulation 10/2011.

In particular, such Regulations provide that materials and objects must be produced in compliance with good manufacturing practices, so that they are inert enough to exclude:
- transfer or migration of substances to food products in such amounts as to endanger human health, whose entity depends on nature and composition of the material, and/or the food, on the contact surface, on the contact time, on the contract temperature;
- unacceptable modifications to the composition of foodstuff; and
- deterioration of organoleptic features of foodstuffs.

It is clear how the problem related to the production and coating of functional and a-toxic plastic items is a very important and regulated question.

Currently, plastic items, in particular cutlery, are mainly composed of polystyrene or polyethylene terephthalate, and methods are known in the art for coloring and decorating plastic objects, such as dyeing, pigmenting, pressing, hot pressing, heat transfers, decoration in dies, spray and galvanic painting. In particular, dyeing or pigmenting is one of the most common and cheap methods to modify or improve the appearance of a plastic object. Dyeing typically comprises the incorporation of a pigment or of a dye into the plastic resin used for molding plastic objects. The pigments can be as concentrated products with solid color or shaped as liquid color.

Moreover, molding with single- or multi-color inks is commonly used for decorating plastic items. The type of inks which can be used on plastic items for foodstuff use are limited due to contact with food, toxicity and environmental problems. Furthermore, at least some of the inks often require a protective element to solve the contact problems with foods.

Known heat transfers and hot molding techniques for decorating plastic articles are not suitable for coating items having a complex three-dimensional geometry, such as cutlery, not guaranteeing an efficient adherence on all surfaces. Moreover, known galvanizing methods for metallizing plastic articles generate a strong environmental impact associated with the use of chemical galvanic substances.

Coating methods for plastic items through chemical deposition techniques, electro-deposition techniques and/or their combination are also known, wherein the items are put in contact with solutions containing metallic ions, and afterwards washed to remove possible remaining chemical substances, implying high working and environmental costs.

A metallization method is also known for plastic cutlery through a physical vapor deposition such as, for example, thermal evaporation, or electronic gun, with a beam of incident electrons wherein the evaporation is produced by a direct electric discharge on the material, which, by losing its energy, locally heats the material to be evaporated; or sputtering, wherein the material to be deposited is eroded by a plasma supplied with direct current or at radiofrequency; or arc-type evaporation wherein the evaporation is produced by a direct electric discharge on the material, as disclosed for example in US2014106145.

Known coating methods however have not a perfect adherence and seal on known plastic materials or propylene of which plastic cutlery or items are composed.

Documents "Plastic Tasting Spoons", 31 May 2017, found on Internet; "Prairieware Disposable Heavy Duty Desert Spoons X100", 2016, found on Internet; US-A1-2009/179442; US-A1-2007/101578; WO-A1-2015/012713, and WO-A1-02/070224 disclose disposable elements shaped as forks, knives and spoons made of high-impact polystyrene. [→ page 4a]

Therefore, object of the present invention is solving the above prior art problems by providing a US-A1-2009/179442, which is the preamble of Claim 1, further discloses that the disposable element is coated with a thin metallic layer which imparts an aesthetic metallic look to the finished product. molding process of a disposable element composed of high-impact polystyrene, equipped with a coating made of stainless steel according to claim 1.

A further object is providing a disposable element obtained through a molding system equipped with a regulating element adapted to regulate the cooling process of the disposable element conferring it a high flexibility and simultaneously sturdiness.

The above and other objects and advantages of the invention, as will appear from the following description, are obtained with a molding process of a disposable element as claimed in Claim 1.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by some preferred embodiments thereof, provided as a non-limiting example, with reference to a preferred configuration of the disposable element to be produced with the process according to the present invention.

As known, high-impact polystyrene, HIPS, is composed of polystyrene and styrene-butadiene rubber (or SBR rubber), combined to obtain a less fragile plastics than polystyrene.

Consequently, a disposable element is described, such as, for example, a fork, a knife, a spoon, a teaspoon, or other similar one, to be used for eating a meal, for household use or for external use, composed of high-impact polystyrene, HIPS, conferring to the disposable element a high flexibility and simultaneously guaranteeing its sturdiness and stiffness, reducing the incidence of accidental breakages of the disposable element, and which is advantageously coated with at least one layer of stainless steel, improving its efficiency in terms of health.

In particular, the disposable element composed of high-impact polystyrene is obtained through at least one injection molding system equipped with at least one press element. Advantageously, such press element is equipped with at least one temperature regulating element, such as for example a heat regulator or other similar one, adapted to regulate a temperature value of the walls of at least one die inserted in the press element depending on at least one temperature value of the high-impact polystyrene injected in the die, during the cooling process of the high-impact polystyrene in the die, conferring to the disposable element, at the end of the cooling process, properties of sturdiness and simultaneously of flexibility, and improving the efficiency of the high-impact polystyrene.

In particular, the high-impact polystyrene in liquid phase is injected through at least one nozzle inside the die, shaped as a fork, or spoon, or knife, or teaspoon, or other similar one, and gets in contact with the walls of the die.

The temperature difference between the temperature value of high-impact polystyrene in liquid phase and the temperature value of the walls of the die is adapted to enable the cooling process and the conferring of the shape to the high-impact polystyrene.

The disposable element can further be coated with at least one coating made of stainless steel.

The present invention therefore deals with a molding process adapted to obtain the above described disposable element, such process being also adapted to confer to such disposable element flexibility and sturdiness, and comprising the following steps:
- providing the press element of the molding system;
- providing the die inside the press element of the molding system;
- activating the temperature regulating element;
- injecting the high-impact polystyrene inside the die in liquid phase, with a starting temperature value of 200°C;
- contacting the high-impact polystyrene with the walls of the die;
- starting the cooling process of the high-impact polystyrene inside the die;
- cyclically evaluating, by the regulating element, the difference between a temperature value of the high-impact polystyrene and a temperature value of the walls of the die, and obtaining at least one difference value;
- if such difference value is not equal to at least one reference value, regulating, by the
regulating element, the temperature value of the walls of the die in a temperature range included between 40°C and 70°C;
- if such difference value is equal to at least one reference value, continuing the cooling process of the high-impact polystyrene inside the die;
- activating a plurality of extractors; and
- expelling the disposable element from the die.

Furthermore, a method for coating the disposable element composed of high-impact polystyrene, according to the present invention, is adapted to coat the disposable element with a layer of stainless steel, conferring hygiene and safety to the disposable element. In particular, the coating method comprises the steps of:
- withdrawing the disposable element composed of high-impact polystyrene from the molding system;
- providing and introducing at least one stainless steel bar inside at least one process chamber;
- inserting the disposable element composed of high-impact polystyrene inside the process chamber;
- hermetically sealing the process chamber;
- extracting air from the process chamber;
- entering inert gas inside the process chamber;
- developing and activating an electric voltage;
- transferring and depositing a plurality of ions from the steel bar to the surface of the disposable element;
- obtaining the disposable element composed of high-impact polystyrene coated with stainless steel.

Finally, the disposable element composed of said high-impact polystyrene and provided with such coating of stainless steel has a weight equal to 5 grams ± 40%.

## Claims

1. Molding process of a disposable element composed of high-impact polystyrene, and obtained through at least one injection molding system equipped with at least one press element, said press element being equipped with at least one temperature regulating element adapted to regulate at least one temperature value of the walls of at least one die of said press element, depending on at least one temperature value of said high-impact polystyrene injected in said die, said molding process comprising the steps of:
- providing said press element of said molding system;
- providing at least one die inside said press element of said molding system;
- activating said temperature regulating element;
- injecting said high-impact polystyrene inside said die in liquid phase with at least one starting temperature value of 200°C;
- contacting said high-impact polystyrene with the walls of said die having a temperature lower than that of said high-impact polystyrene;
- starting at least one cooling process of the high-impact polystyrene inside said die;
**characterized in that** it further comprises the steps of:
- evaluating by said regulating element a difference between a temperature value of the high-impact polystyrene and a temperature value of said walls of said die, and obtaining at least one difference value;
- if said difference value is not equal to at least one reference value, regulating, by said regulating element, said temperature value of said walls of said die in a temperature range included between 40°C and 70°C;
- if said difference value is equal to said reference value, continuing said cooling process of said high-impact polystyrene inside said die;
- activating a plurality of extractors; and
- expelling said disposable element from said die.

2. Process according to claim 1, **characterized in that** said disposable element is a fork, a knife, a spoon, a teaspoon, used to eat at least one meal.

3. Process according to claim 1 or 2, further comprising a coating process of said disposable element, said coating process comprising the steps of:
- withdrawing the disposable element composed of high-impact polystyrene from the molding system;
- providing and introducing at least one stainless steel bar inside at least one process chamber;
- inserting the disposable element composed of high-impact polystyrene inside the process chamber;
- hermetically sealing the process chamber;
- extracting air from the process chamber;
- entering inert gas inside the process chamber;
- developing and activating an electric voltage;
- transferring and depositing a plurality of ions from the steel bar to the surface of the disposable element; and
- obtaining the disposable element composed of high-impact polystyrene coated with stainless steel.

4. Process according to the previous claim, **characterized in that** said disposable element composed of said high-impact polystyrene and equipped with said coating made of stainless steel has a weight equal to 5 grams ± 40%.

## Patentansprüche

1. Verfahren zum Formen eines Einwegelements, das aus schlagfestem Polystyrol besteht und mittels mindestens eines Spritzgusssystems erhalten wird, das mit mindestens einem Presselement ausgestattet ist, wobei das Presselement mit mindestens einem Temperaturregelelement ausgestattet ist, das mindestens regeln kann einen Temperaturwert der Wände von mindestens einer Form des Presselements als Funktion von mindestens einem Temperaturwert des in die Form eingespritzten Polystyrols mit hohem Schlag, wobei der Formungsprozess die Schritte umfasst:
- Bereitstellung des Presselements des Formsystems;
- Herstellung von mindestens einer Form innerhalb des Presselements des Formsystems;
- Aktivierung des Temperaturregelelements;
- Einspritzen des schlagfesten Polystyrols in die Form in der flüssigen Phase mit mindestens einem Anfangstemperaturwert von 200 °C;
- Kontakt des schlagfesten Polystyrols mit den Wänden der Form mit einer Temperatur, die niedriger als die des schlagfesten Polystyrols ist;
- Beginn mindestens eines hochschlagfesten Polystyrolkühlprozesses in der Form;
**gekennzeichnet durch** die Tatsache, dass es auch die Phasen umfasst:
- Bewertung einer Differenz zwischen einem Temperaturwert des Polystyrols mit hoher Schlagfestigkeit und einem Temperaturwert der Wände der Form durch das Regelelement und Erhalten mindestens eines Differenzwerts;
- wenn der Differenzwert nicht mindestens einem Referenzwert entspricht, Regelung des Temperaturwerts der Wände der Form durch das Regelelement in einem Temperaturbereich zwischen 40 °C und 70 °C;
- wenn der Differenzwert gleich dem Referenzwert ist, Fortsetzung des Abkühlprozesses des schlagfesten Polystyrols in der Form;
- Aktivierung einer Vielzahl von Extraktoren; und
- Ausstoßen des Einwegelements aus der Form.

2. Verfahren nach Anspruch 1, **dadurch gekennzeichnet, dass** das Einwegelement eine Gabel, ein Messer, ein Löffel, ein Teelöffel ist, die zum Verzehr von mindestens einer Mahlzeit geeignet sind.

3. Verfahren nach Anspruch 1 oder 2, ferner umfassend ein Verfahren zum Beschichten des Einwegelements, wobei das Beschichtungsverfahren die Schritte umfasst:
- Entnahme des Einwegelements aus schlagfestem Polystyrol aus dem Formsystem;
- Vorbereitung und Einführung von mindestens einem Edelstahlstab in mindestens einer Prozesskammer;
- Einsetzen des Einwegelements aus schlagfestem Polystyrol in die Prozesskammer;
- hermetischer Verschluss der Prozesskammer;
- Absaugung von Luft aus der Prozesskammer;
- Einbringen eines Inertgases in die Prozesskammer;
- Entwicklung und Aktivierung einer elektrischen Spannung;
- Übertragung und Ablagerung mehrerer Stahlionen von der Stahlstange auf die Oberfläche des Einwegelements; und
- Erhalt des Einwegelements aus schlagfestem Polystyrol, das mit Edelstahl beschichtet ist.

4. Verfahren nach dem vorhergehenden Anspruch, **dadurch gekennzeichnet, dass** das Einwegelement, das aus dem schlagfesten Polystyrol besteht und mit der Edelstahlbeschichtung versehen ist, ein Gewicht von 5 g± 40% aufweist.

## Revendications

1. Procédé de moulage d'un élément jetable constitué de polystyrène choc, et obtenu au moyen d'au moins un système de moulage par injection équipé d'au moins un élément de presse, ledit élément de presse étant équipé d'au moins un élément de régulation de température apte à réguler au moins une valeur de température des parois d'au moins un moule dudit élément de presse, en fonction d'au moins une valeur de température dudit polystyrène choc injecté dans ledit moule, ledit procédé de moulage comprenant les étapes de:
- fourniture dudit élément de presse dudit système de moulage;
- préparation d'au moins un moule à l'intérieur dudit élément de presse dudit système de moulage;
- activation dudit élément de régulation de température;
- injection dudit polystyrène choc à l'intérieur dudit moule en phase liquide avec au moins une valeur de température initiale de 200 °C;
- contact dudit polystyrène choc avec les parois dudit moule ayant une température inférieure à celle dudit polystyrène choc;
- début d'au moins un processus de refroidissement du polystyrène à fort impact à l'intérieur dudit moule;
**caractérisé par le fait qu'**il comprend également les étapes de:
- évaluation par ledit élément de régulation d'une différence entre une valeur de température du polystyrène choc et une valeur de température desdites parois dudit moule, et obtention d'au moins une valeur de différence;
- si ladite valeur de différence n'est pas égale à au moins une valeur de référence, ajustement par ledit élément de régulation de ladite valeur de température desdites parois dudit moule dans une plage de température comprise entre 40 °C et 70 °C;
- si ladite valeur de différence est égale à ladite valeur de référence, poursuite dudit processus de refroidissement dudit polystyrène choc à l'intérieur dudit moule;
- activation d'une pluralité d'extracteurs; et
- l'expulsion dudit élément jetable dudit moule.

2. Procédé selon la revendication 1, **caractérisé en ce que** ledit élément jetable est une fourchette, un couteau, une cuillère, une cuillère à café, aptes à consommer au moins un repas.

3. Procédé selon la revendication 1 ou 2, comprenant en outre un procédé de revêtement dudit élément jetable, ledit procédé de revêtement comprenant les étapes de:
- retrait de l'élément jetable constitué de polystyrène résistant aux chocs du système de moulage;
- préparation et introduction d'au moins une barre en acier inoxydable à l'intérieur d'au moins une chambre de traitement;
- insertion de l'élément jetable constitué de polystyrène résistant aux chocs à l'intérieur de la chambre de traitement;
- fermeture hermétique de la chambre de traitement;
- extraction de l'air de la chambre de traitement;
- introduction d'un gaz inerte dans la chambre de traitement;
- développement et activation d'une tension électrique;
- transfert et dépôt d'une pluralité d'ions d'acier de la barre d'acier à la surface de l'élément jetable; et
- l'obtention de l'élément jetable constitué de polystyrène résistant aux chocs revêtu d'acier inoxydable.

4. Procédé selon la revendication précédente, **caractérisé en ce que** ledit élément jetable constitué dudit polystyrène choc et muni dudit revêtement en acier inoxydable a un poids égal à 5 grammes ± 40%.
